Europäisches Patentamt

European Patent Office

Office européen des brevets

(19)

(11) Veröffentlichungsnummer : **0 059 395**
**B1**

(12) **EUROPÄISCHE PATENTSCHRIFT**

(45) Veröffentlichungstag der Patentschrift :
28.05.86

(21) Anmeldenummer : 82101287.9

(22) Anmeldetag : 19.02.82

(51) Int. Cl.⁴ : **H 04 L   5/04**, **H 04 B   9/00**

(54) Verfahren zur Integration eines Dienstleitungsweges in Lichtleitübertragungsstrecken.

(30) Priorität : 20.02.81 DE 3106269

(43) Veröffentlichungstag der Anmeldung :
08.09.82 Patentblatt 82/36

(45) Bekanntmachung des Hinweises auf die Patenterteilung : 28.05.86 Patentblatt 86/22

(84) Benannte Vertragsstaaten :
AT BE CH DE FR GB IT LI NL SE

(56) Entgegenhaltungen :
PATENTS ABSTRACTS OF JAPAN, Band 5, Nr.
63(E54) (735), 28. April 1981, Tokyo, JP.
IEEE TRANS. ON COMMUNICATIONS, Band COM-27,
Nr. 12, Dezember 1979, Seiten 1946-1952, New York,
USA P.P. GIUSTO: "Level division multiplexing of
service channels in multilevel digital transmissions"
ELECTRONIC ENGINEERING, Band 49, Nr. 600,
Dezember 1977, Seite 17, London, G.B. "PAM signals
ease data transmission problems"

(73) Patentinhaber : Siemens Aktiengesellschaft
Berlin und München Wittelsbacherplatz 2
D-8000 München 2 (DE)

AEG - TELEFUNKEN AKTIENGESELLSCHAFT
Theodor-Stern-Kai 1
D-6000 Frankfurt 70 (DE)

Standard Elektrik Lorenz Aktiengesellschaft
Kurze Strasse 8
D-7000 Stuttgart 30 (Feuerbach) (DE)

(72) Erfinder : Feldmann, Jürgen, Dr.-Ing.
Feldstedter Weg 6
D-1000 Berlin 49 (DE)
Erfinder : Rocks, Manfred, Dr.-Ing.
Kniephofstrasse 24
D-1000 Berlin 41 (DE)

(74) Vertreter : Mehl, Ernst, Dipl.-Ing.
Postfach 22 01 76
D-8000 München 22 (DE)

**Beschreibung**

Die Erfindung betrifft ein Verfahren zur Integration eines Datenstromes in Lichtleitübertragungsstrecken gemäß dem Oberbegriff des Hauptanspruchs.

Während der Montage oder bei der Fehlersuche ist es erforderlich, Dienstleitungswege über das einzuziehende oder schon vorhandene Kabel zu schalten. Bei Übertragungsstrecken, die über Kabel mit metallischen Adern geführt sind, kann der Dienstleitungsweg auf diesen metallischen Adern geführt werden. Bei Übertragungen über Lichtwellenleiterkabel ohne metallischen Beipack scheidet diese Möglichkeit jedoch aus.

Deshalb wird in vielen Fällen ein separates Kabel mit metallischen Adern ausgelegt, über welches der Dienstleitungsweg dann geführt wird. Dieses Verfahren hat jedoch einen hohen Zeit- und Kostenaufwand.

In der DE-AS-29 13 924 ist ein Kabelfernsehsystem beschrieben, das ohne großen Aufwand, vor allem ohne zusätzliche Kabel, die Möglichkeit zur Übertragung zusätzlicher niederfrequenter Informationen schafft. Im Gegensatz zu dem Verfahren nach der Erfindung wird die zusätzliche Information jedoch nicht mit der Hauptinformation zum Zwecke der Übertragung fest verknüpft. Es wird vielmehr von der Hauptinformation eine Hilfsfrequenz eigens für die Übertragung der zusätzlichen Informationen abgeleitet.

Nachteilig ist jedoch außerdem bei dem Vorschlag nach der DE-AS-29 13 924, daß für die Übertragung dieser zusätzlichen Information ein freier Übertragungskanal benötigt wird.

Aus dem japanischen Patens-Abstrakt Nr. 56-13850 in Verbindung mit der JP-A-5013850 ist ein System nach dem Oberbegriff des Hauptanspruchs zur Übertragung digitaler Signale bekannt, bei dem ein Datenstrom niedriger Bitrate mit einem Hauptdatenstrom vergleichsweise hoher Bitrate mit zwei Strahlungsleistungspegeln kombiniere wird. Der Übertragungsdatenstrom mit drei Strahlungs leistungspegeln wird über eine Lichtwellenleiterübertragungsstrecke ohne metallische Beipackadern zur Empfangsseite geführt. In der Empfangsseite ist neben einem auf die ersten zwei Pegel ansprechenden Entscheider für den Hauptstrom ein weiterer, nur auf den dritten Pegel ansprechender Entscheider für den zusätzlichen Datenstrom parallelgeschaltet.

Die der Erfindung zugrunde liegende Aufgabe, bei auf Lichtwellenleiterkabeln ohne metallischen Beipack geführten Übertragungsstrecken gleichzeitig einen Datenstrom (z. B. Dienstleitungsdatenstrom) mit zu übertragen, wird durch die im Hauptanspruch gekennzeichnete Erfindung gelöst.

Vorteilhafte Weiterbildungen der Erfindung sind in den Unteransprüchen beschrieben.

Der mit der Erfindung erzielbare Vorteil besteht insbesondere darin, daß bei Dienstleitungswegen, die über Lichtwellenleiterkabel ohne metallischen Beipack geführt werden, es nicht erforderlich ist, ein separates Kabel mit metallischen Adern auszulegen. Alle Kanäle eines Übertragungssystems bleiben dem öffentlichen Verkehr unverändert vorbehalten und trotzdem sind die Dienstleitungswege integriert. Dadurch werden unnötige Kosten vermieden.

Vorteilhaft ist weiterhin, daß bei Verwendung des Verfahrens nach der Erfindung in PCM-Systemen an den CCITT-Rahmenstrukturen für den PCM-Multiplexbetrieb des Hauptdatenstromes nichts geändert wird. Vorteilhaft ist ferner, daß ein nicht benötigter erfindungsgemäß geschaffener Dienstleitungsweg mittels zusätzlicher bekannter Geräte für eine automatische Streckenüberwachung benutzt werden kann.

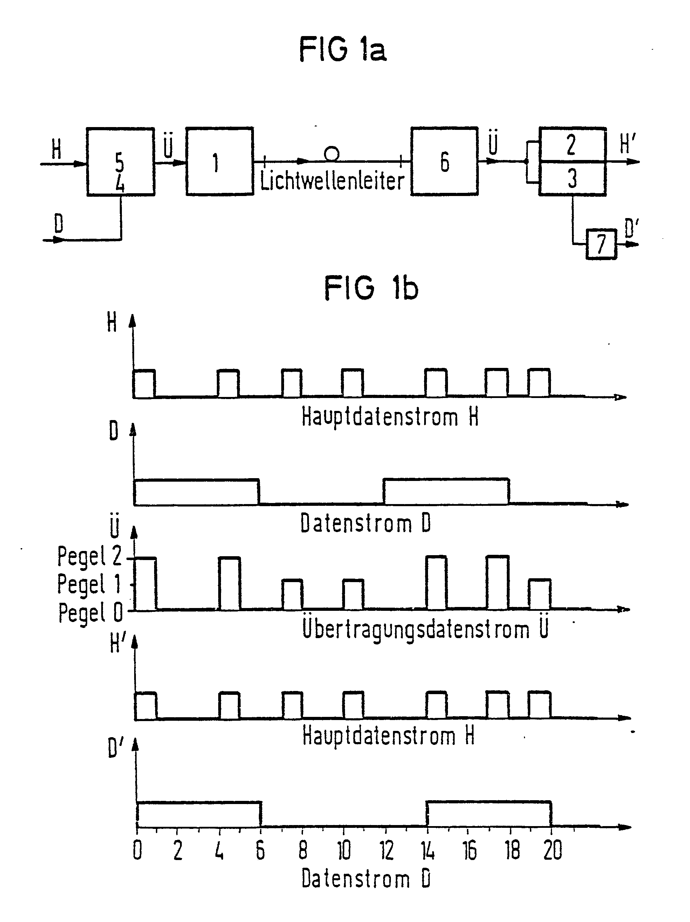

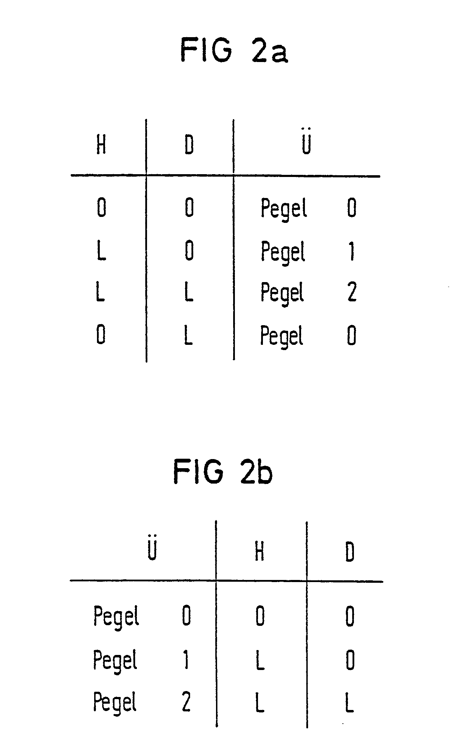

Die Erfindung wird anhand eines in Fig. 1 und Fig. 2 dargestellten Ausführungsbeispiels näher erläutert.

Es zeigen :

Figur 1 ein Blockschaltbild mit Impulsdiagramm und

Figur 2 eine Codier- und Decodiertabelle.

Fig. 1a zeigt das Blockschaltbild eines Ausführungsbeispiels nach der Erfindung und Fig. 1b die entsprechend dazugehörigen Impulsdiagramme bei « return to zero » (RZ). Die Erfindung ist jedoch auch dann anwendbar, wenn mit « non return to zero » (NRZ) gearbeitet wird.

Ein Sender 1 wird von einer mit zwei Eingängen versehenen Ansteuerelektronik 5 angesteuert. In dieser erfolgt die Zusammenfassung eines Hauptdatenstromes H und eines Datenstromes D zu einem Übertragungsdatenstrom Ü. Die Zusammenfassung erfolgt so, daß die Impulse des Übertragungsdatenstromes Ü einen weiteren (z. B. dritten) Strahlungsleistungspegel annehmen, wenn Impulse beider Datenströme gleichzeitig auftreten (im elektrischen Teil sind es elektrische Pegel, im optischen Teil Strahlungsleistungspegel).

Hierzu ist die Ansteuerelektronik 5 mit einem zweiten Eingang 4 für den Datenstrom D ausgerüstet. Die Zusammenfassung von Hauptdatenstrom H und Datenstrom D besteht nach der Erfindung darin, daß die Versorgungsspannung der Ansteuerelektronik 5 oder eines dafür zweckmäßigen Teils der Schaltung im Takt des Datenstroms D erhöht wird. Dadurch wird erreicht, daß immer dann, wenn ein Impuls vom Hauptdatenstrom H ansteht, dieser bei einem gleichzeitig am Eingang 4 der Ansteuerelektronik 5 anstehenden Impuls des Datenstroms D in seinem Spannungspegel verändert (in der Regel erhöht) wird. « L »-Impulse des Datenstromes D sind also nur dann übertragbar, wenn im Hauptdatenstrom H « L »-Impulse auftreten, die mit Hilfe des Datenstromes D in ihren Spannungspegeln verändert werden. Dieses ist aus der Codiertabelle (Fig. 2a) ersichtlich. Diese Übertragbarkeit ist bei der Verwendung von MBNB-Codes für den Hauptdatenstrom H jedoch immer gegeben, da dieser aufgrund der höheren Bitrate wesentlich höherfrequenter als der Datenstrom D ist. Auch bei Verwendung eines Scramblers ist ebenfalls mit höchster Wahrscheinlichkeit eine längere Nullfolge ausgeschlossen.

Der in der Ansteuerelektronik 5 erzeugte Übertragungsdatenstrom Ü wird im Sender 1 in eine Folge von entsprechenden Strahlungsimpulsen unterschiedlicher Leistungspegel umgewandelt und auf das Lichtwellenleiterkabel gegeben.

Auf der Empfangsseite wird der Übertragungsdatenstrom Ü von einem Empfänger 6 parallel auf einen ersten Entscheider 2 für den Hauptdatenstrom H und einen zweiten Entscheider 3 für den Datenstrom D gegeben.

Der erste Entscheider 2 für den Hauptdatenstrom H liefert immer dann ein « L » (Fig. 2b), wenn der Absolutwert eines ersten Spannungspegels am Ausgang des Empfängers 6 um einen gewissen Wert von Null verschieden ist (Pegel 1), und somit die Entscheidungsschwelle überschreitet ; dies ist unabhängig davon, ob an der Ansteuerelektronik 5 nur ein Signal des Hauptdatenstromes H (Pegel 1) oder zusätzlich ein Signal des Datenstromes D (Pegel 2) vorliegt.

Der zweite Entscheider 3 für den Datenstrom D liefert immer dann ein « L », wenn am Ausgang des Empfängers 6 der Absolutwert des zweiten Spannungspegels von Null verschieden und absolut größer als der Absolutwert des ersten Spannungspegels ist und die entsprechende Entscheiderschwelle des Entscheiders 3 überschreitet. Die Länge der vom zweiten Entscheider 3 für den Datenstrom D abgegebenen Impulse entspricht etwa der Länge der Impulse des Hauptdatenstromes H. Die Länge der Impulse des Datenstromes D ist jedoch aufgrund der sehr viel geringeren Bitrate sehr viel länger als die des Hauptdatenstromes H. Somit müssen die vom zweiten Entscheider 3 abgegebenen Impulse auf die ursprüngliche Länge der Impulse des Datenstroms D verlängert werden. Dies wird durch einen dem zweiten Entscheider 3 nachgeschalteten monostabilen Multivibrator 7 erreicht. Weitere während dieser Impulsverlängerung eintreffende Schwellwertüberschreitungen mit dem höchsten Pegel 2 in Fig. 2b lösen keine unstabilen Zustände des monostabilen Multivibrators 7 aus.

Infolge der sehr viel längeren Impulse des Datenstromes D kommt es auf deren genauen Beginn nicht so genau an, sofern der Hauptdatenstrom H keine zu lange Nullfolge hat.

Im Falle der Verwendung des Verfahrens in einem den Hauptdatenstrom übertragenden PCM-System lassen sich Anfang und Ende eines Wortes aus dem Datenstrom D durch die im Hauptdatenstrom H enthaltenen Rahmenkennungswerte definieren, oder man definiert für einige aufeinanderfolgende Worte im Datenstrom D ein eigenes Rahmenkennungswort. Letzteres Verfahren hat gegenüber ersterem den Vorteil, daß auch bei sehr fehlerhafter Übertragung des Hauptdatenstromes H der Datenstrom D unabhängig von den Fehlern übertragen wird.

**Patentansprüche**

1. Verfahren zur Integration eines vorzugsweise zur Übertragung von Daten- und Steuerbefehlen sowie Meßwerten dienenden binären getakteten oder ungetakteten Datenstroms (B) niedriger Bitrate (z. B. Dienstleistungsdatenstrom) in einen Hauptdatenstrom (H) hoher Bitrate mit 2 Strahlungsleistungspegeln, der über eine Lichtwellenleiter-Übertragungsstrecke ohne metallische Beipackadern geführt wird, mit einer Zusammenfassung des Datenstroms (D) niedriger Bitrate mit dem Hauptdatenstrom (H) in einer Ansteuerelektronik (5) auf der Sendeseite zu einem Übertragungsdatenstrom (U) mit drei Strahlungsleistungspegeln, wobei auf der Empfangsseite ein auf die ersten zwei Pegel ansprechender Entscheider für den Hauptdatenstrom (H) und ein nur auf den dritten Pegel ansprechender zweiter Entscheider für den Datenstrom (D) niedriger Bitrate parallel angesteuert werden, dadurch gekennzeichnet, daß die Zusammenfassung von Hauptdatenstrom (H) und Datenstrom (D) niedriger Bitrate in der Ansteuerelektronik (5) für den Sender (1) durch Änderung der Versorgungsspannung der Ansteuerelektronik (5) im Takt des Datenstroms (D) niedriger Bitrate erfolgt und daß dabei der Hauptdatenstrom keine längeren Nullfolgen aufweist.

2. Verfahren nach Patentanspruch 1, dadurch gekennzeichnet, daß bei Übertragung des Hauptdatenstroms in einem PCM-System die im Hauptdatenstrom enthaltenen Rahmenkennwörter zur Festlegung des Anfangs und Endes der Worte des Datenstroms (D) niedriger Bitrate dienen.

3. Verfahren nach Patentanspruch 1, dadurch gekennzeichnet, daß eine bestimmte Anzahl Worte des Datenstroms (D) niedriger Bitrate durch ein zusätzliches Rahmenkennwort ergänzt werden.

**Claims**

1. A method of integrating a binary clock-pulse-driven or non-clock-pulse-driven data flow (B) of low bit rate (e. g. a service conductor data flow), which preferably serves for the transmission of data commands and control commands and measured values, into a main data flow (H) of high bit rate with two radiation power levels, which is conducted via a light waveguide transmission link without metallic auxiliary wires, where the data flow (D) of low bit rate is combined with the main data flow (H) in a drive electronic unit (5) at the transmitting end to form a transmission data flow (U) with three radiation power levels, where at the receiving end a decision device — which responds to the first two levels — for the main data flow (H) and a second decision device — which responds only to the third level — for the data flow (D) having the low bit rate are driven in parallel, characterised in that the combination of main data flow (H) and low rate data flow (D) is carried out in the drive electronic unit (5) for the transmitter (1) by changing the supply voltage of the drive electronic unit (5) in the timing of the low bit rate data flow (D) and that here the main data flow does not contain long zero sequences.

2. A method as claimed in Claim 1, characterised in that when the main data flow is transmitted in a PCM system, the frame code words contained in the main data flow serve to fix the start and end of the words of the low bit rate data flow (D).

3. A method as claimed in Claim 1, characterised in that a specific number of words of the low bit rate data flow (D) are supplemented by an additional frame code word.

### Revendications

1. Procédé pour intégrer un flux binaire de données (B), cadencé ou non cadencé, possédant un faible débit binaire (par exemple un flux de données d'une ligne de service) et servant de préférence à la transmission de données et d'instructions de commande ainsi que de valeurs de mesure, dans un flux principal de données (H) possédant un débit binaire élevé avec 2 niveaux de puissance de rayonnement et qui est transmis par l'intermédiaire d'une voie de transmission à fibres optiques, ne comportant pas de conducteurs métalliques périphériques, avec réunion du flux de données (B) possédant un faible débit binaire au flux principal de données (H) dans un dispositif électronique de commande (5) situé du côté émission, pour former un flux de données de transmission (U) possédant trois niveaux de puissance de rayonnement, et selon lequel, du côté réception, un circuit de décision répondant aux deux premiers niveaux et prévu pour le flux principal de données (H) et un second circuit de décision répondant uniquement au troisième niveau et prévu pour le flux de données (D) possédant un faible débit binaire sont commandés en parallèle, caractérisé par le fait que la réunion du flux principal de données (H) et du flux de données (D) possédant un faible débit binaire dans le dispositif électronique de commande (5) prévu pour l'émetteur (1) est réalisée au moyen d'une modification de la tension d'alimentation du dispositif électronique de commande (5) à la cadence du flux de données (D) possédant un faible débit binaire, et que le flux principal de données ne comporte aucune suite très longue de zéros.

2. Procédé suivant la revendication 1, caractérisé par le fait que lors de la transmission du flux principal de données dans un système MIC, les mots d'identification de trame, contenus dans le flux principal de données, servent à déterminer le début et la fin des mots du flux de données (D) possédant un faible débit binaire.

3. Procédé suivant la revendication 1, caractérisé par le fait qu'un nombre déterminé de mots du flux de données (D) possédant un faible débit binaire sont complétés par un mot supplémentaire d'identification de trame.

# FIG 1a

H → | 5 / 4 | Ü → | 1 | → ○ Lichtwellenleiter → | 6 | Ü → | 2 | H' →
                                                              | 3 |

D → (into 5/4)

| 7 | D' →

# FIG 1b

H

Hauptdatenstrom H

D

Datenstrom D

Ü

Pegel 2
Pegel 1
Pegel 0

Übertragungsdatenstrom Ü

H'

Hauptdatenstrom H

D'

0  2  4  6  8  10  12  14  16  18  20

Datenstrom D

1

# FIG 2a

| H | D | Ü | |
|---|---|---|---|
| 0 | 0 | Pegel | 0 |
| L | 0 | Pegel | 1 |
| L | L | Pegel | 2 |
| 0 | L | Pegel | 0 |

# FIG 2b

| Ü | | H | D |
|---|---|---|---|
| Pegel | 0 | 0 | 0 |
| Pegel | 1 | L | 0 |
| Pegel | 2 | L | L |